# EUROPEAN PATENT APPLICATION

(11) **EP 2 325 602 A2**
(43) Date of publication of application: **25.05.2011**
(21) Application number: 10192434.8
(22) Date of filing: 24.11.2010
(51) Int. Cl.: G01C 9/10

(54) **Inclinometer**

(30) Priority: 24.11.2009 US 263857 P
(71) Applicant: Hill-Rom Services, Inc., Wilmington, DE 19801 (US)
(72) Inventor: Zerhusen, Robert, OH 45252 (US)
(74) Representative: Findlay, Alice Rosemary

(57) **Abstract**

An inclinometer configured to be coupled to a structure and measure an angle of inclination of the structure with respect to a reference plane comprises a first layer, a second layer, and an indicator. The first layer includes a transparent portion and a scale representing angles located proximate to the transparent portion. The second layer includes an opening that defines a path. The first layer is coupled to a first side of the second layer such that the transparent portion extends along the path. The indicator is movably disposed in the path. The indicator moves along the path as the structure moves between a first orientation and a second orientation with respect to the reference plane. The indicator cooperates with the scale to indicate an angle of inclination of the structure with respect to the reference plane.

## Description

This disclosure relates generally to an inclinometer, More particularly, but not exclusively, one illustrative embodiment relates to a low cost inclinometer to be used with a person-support apparatus.

An inclinometer is an instrument for measuring the angle of elevation or inclination of an object/structure with respect to a reference plane. In hospitals. inclinometers can be used to measure the angle of elevation of objects, such as, for example, components of a hospital bed or equipment coupled thereto. While various inclinometers have been developed, there is still room for development. Thus, a need persists for further contributions in this area of technology.

The present disclosure includes one or more of the following features alone or in any combination.

One illustrative embodiment of the present disclosure can include an inclinometer that can include a first layer marked with a scale and having a transparent portion a second layer fixed to the structure, a middle layer positioned between the first layer and the second layer and having a channel therethrough, and an indicator movably disposed in the channel.

The invention will now be further described by way of example with reference to the accompanying drawings, in which:

Fig 1 is a perspective view of an inclinometer according to one illustrative embodiment;

Fig. 2 is a perspective view of the inclinometer of Fig. 1 coupled to the head section of a person-support apparatus according to one illustrative embodiment;

Fig. 3 is an exploded view of the inclinometer of Fig. 1 including a first layer, a second layer, and a third layer according to one illustrative embodiment;

Fig. 4 is an exploded view of the inclinometer of Fig. 1 including a first layer and a second layer according to another illustrative embodiment;

Fig. 5 is a flowchart illustrating a method of manufacturing the inclinometer of Fig. 1

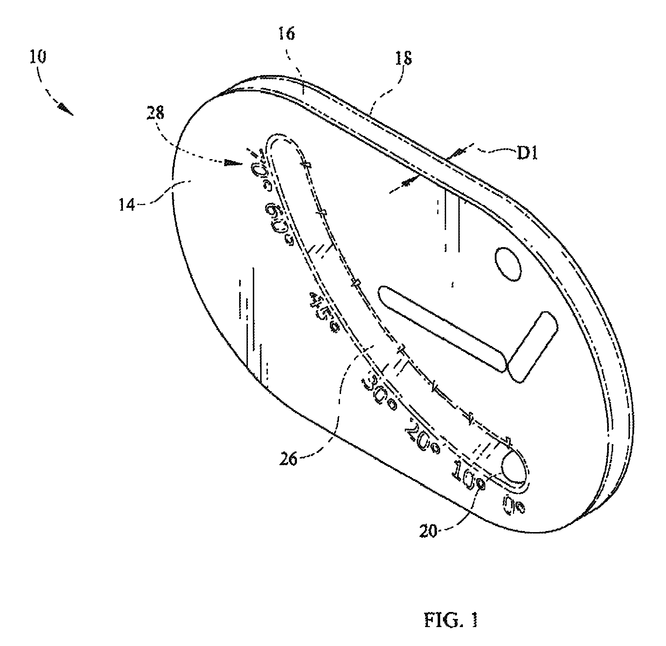

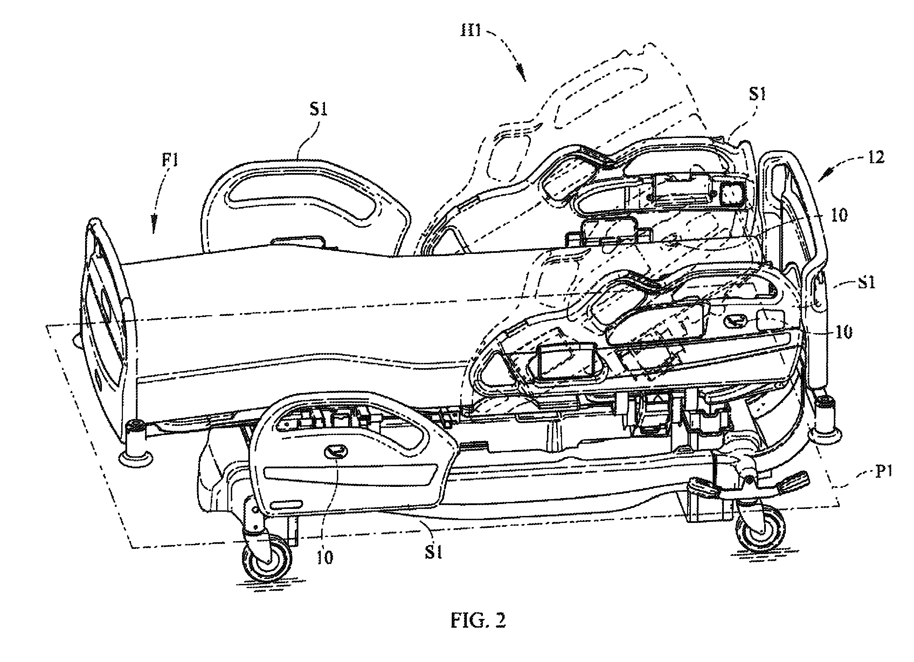

An inclinometer 10 according to one illustrative embodiment of the current disclosure is shown in Figs. 1-4. The inclinometer 10 can be used to measure the angle of elevation or inclination of an object 12 or structure 12 with respect to a reference plane P1. In one illustrative embodiment, the inclinometer 10 can be coupled to a siderail S1 of a person-support apparatus 12 and can be configured to determine the angle of inclination of the head support section H1 and/or foot section F1 with respect to the reference plane P1 as the head support section H1 and/or foot support section F1 move with respect to the reference plane P1 as shown in Fig. 2. It should be appreciated that the inclinometer can also be attached to other portions of the person-support apparatus 12. In other illustrative embodiments, the inclinometer 10 can be used with other devices 12 or structures 12, such as, for example, ladders, fluid containers, leveling devices, or other devices.

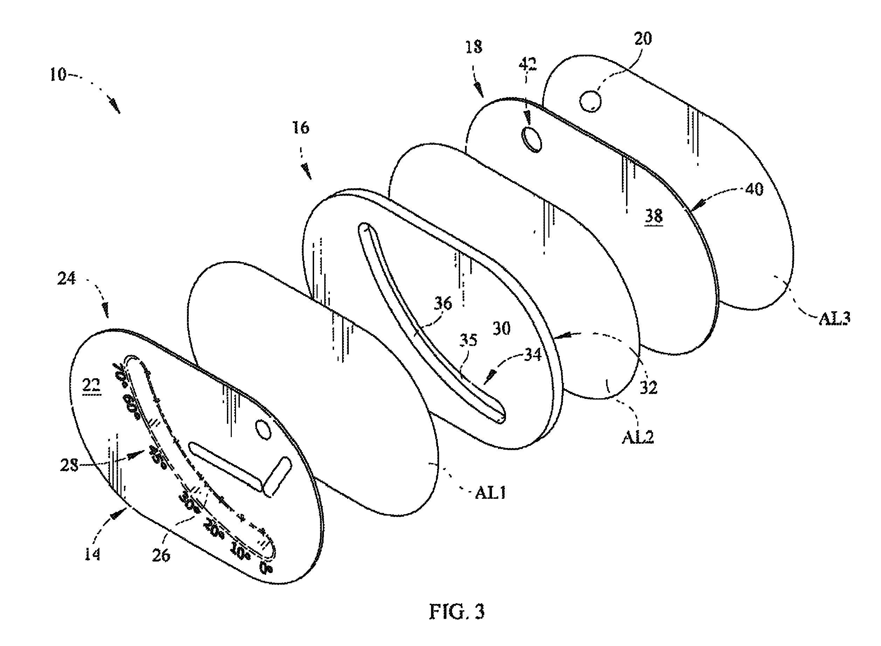

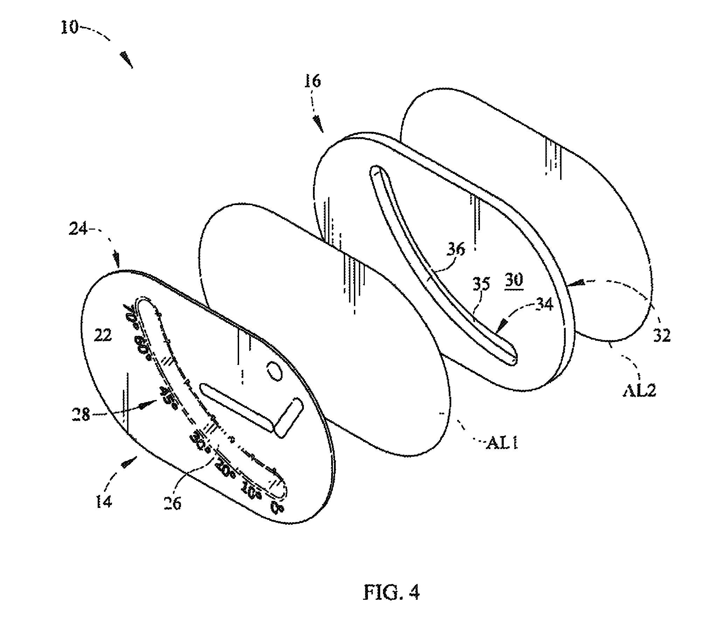

The inclinometer 10 includes a first layer 14, a second layer 16 or middle layer 16, a third layer 18, and an indicator 20 as shown in Figs. 1 & 3. It should be appreciated that the inclinometer 10 can include only the first layer and the second layer 16 as shown in Fig. 4. The first layer 14, the second layer 16, and the third layer 18 can be formed from a sheet of polymeric material to reduce the overall depth D1 of the inclinometer 10. The first layer 14 is coupled to the second layer 16 with a first adhesive layer AL1, the second layer 16 is coupled to the third layer 18 with a second adhesive layer AL2, and the third layer 18 is coupled to an object 12 with a third adhesive layer AL3 it should be appreciated that the second adhesive layer AL2 can couple the second layer 16 to an object 12 It should also be appreciated that the layers can be coupled together and/or to an object 12 with a fastener (not shown).

The first layer 14 includes a first surface 22, a second surface 24 coupled to the middle layer 16, and a transparent portion 26 extending through the first surface 22 and the second surface 24 as shown in Figs 1 & 3-4. The first surface 22 has a scale 28 or indicia 28 thereon proximate the transparent portion 26 for measurement of the angular position of the indicator 20 with respect to the reference plane P1. In one illustrative embodiment, the range of the scale 28 is from about 0 degree to about 90 degree. It should be appreciated that the range can be from about -30 degrees to about 90 degrees for measuring the angle of inclination of a person-support apparatus 12 in a Trendelenburg and/or reverse Trendelenburg position. The transparent portion 26 is configured to show the position of the indicator 20 with respect to the scale 28. It should be appreciated that the transparent portion 26 can be composed of any flexible transparent or semi-transparent polymeric material. It should be appreciated that the entire first layer 14 can be composed of a transparent and/or semi-transparent material

The middle layer 16 is positioned between the first layer 14 and the third layer 18 as shown in Figs 1 & 3-4. It should be appreciated that the middle layer 16 can be coupled between the first layer 14 and an object 12. The middle layer 16 includes a first middle surface 30, a second middle surface 32, and an opening 34 extending through the first middle surface 30 and the second middle surface 32 to define a groove 35 or channel 35 therein The first middle surface 30 is coupled to the second surface 24 of the first layer 14 and the second middle surface 32 is coupled to the third layer 18. It should be appreciated that the second middle surface 30 can be coupled to an object 12. The groove 35 is curved and is aligned with the transparent portion 26 when the middle layer 16 is coupled to the first layer 14. The groove 35 has an inner surface 36 that can be engaged by the indicator 20. In one illustrative embodiment, the inner surface 36 is flat. In another illustrative embodiment, the inner surface 36 is concavely shaped. In yet another illustrative embodiment, the inner surface 36 includes a protrusion (not shown) to prevent the indicator 20 from falling out at least one side of the groove 35. In still another illustrative embodiment, the inner surface 36 is slanted. It should be appreciated that the second middle surface 32 can cooperate with the object 12 to retain the indicator 20 within the groove 35.

The third layer 18 can include a first surface 38, a second surface 40, and an opening 42 through the first surface 38 and the second surface 40 as shown in Fig. 3 & 4. The first surface 38 can be coupled to the second middle surface 32 and the second surface 40 can be coupled to an object 12. It should be appreciated that the third layer 18 can be fixed or adhered on a person-support apparatus 12 using an adhesive or any other fastener (not shown). It should also be appreciated that a removable backing (not shown) can be coupled to an object 12 and removably coupled to the third layer 18. The opening 42 can be aligned such that it provides an opening into the groove 35 for the indicator 20 to be inserted into the groove 35.

The indicator 20 is configured to be positioned within the groove 35 and engage the inner surface 36 to move the indicator 20 along the groove 35 as shown in Figs. 1-3. In one illustrative embodiment, the indicator 20 is a sphere, such as, for example, a bearing ball, It should be appreciated that the indicator 20 can be any object which can be easily rolled within the groove 35. It should be appreciated that the indicator 20 can be marked with a specific color to match with the graphics of the person-support apparatus 10. It should also be appreciated that the indicator can also be painted with or composed of a material which can glow in the dark. It should further be appreciated that the groove 35 can be filled with a fluid (not shown) that can reduce the settling time of the indicator 20 and result in further accurate indication of the angle of inclination.

In operation, the indicator 20 engages the inner surface of the groove 35 and moves within the groove 35 as the object 12, such as, for example, the head support section H1 of a person-support apparatus 12, moves from a first position to a second position. Gravity causes the indicator 20 to move toward and remain at the lowest position in the semicircular groove 35 at any of the first, second and any intermediate positions of the object, such as, for example, the head support section H1. Thus, when an object 12, such as, the head support section H1, is in the first position, such as, a horizontally lying down position, the indicator 28 can be at the positioned inside the groove 35 which is marked with 0° on the scale 28 As the object 12 such as, the head support section H1, moves to the second position, the angle of inclination changes and gravity causes the indicator 20 to move within the groove 35 to a new marking on the scale 28 to indicate the angle corresponding to the second position. In case of a Trendelenburg position, the indicator 20 can move towards the negative marking on the scale 28 to indicate the angle corresponding to that particular Trendelenburg position.

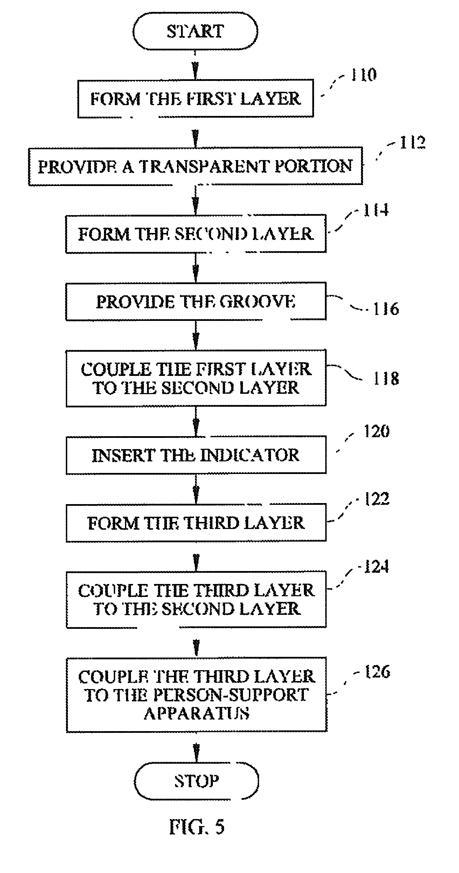

Fig. 5 shows a flowchart 100 for the steeps of manufacturing the inclinometer 10 described above. At operation 110 the first layer 14 is formed. It should be appreciated that the first layer 14 can be molded or cut to form the desired shape and thickness.

At operation 112 a portion of the first layer 14 is removed and a transparent or semi-transparent material is inserted in the removed portion's place. It should be appreciated that the entire first layer 14 can be transparent and/or semi-transparent,

At operation 114 the second layer 16 is formed.

At operation 116 the opening 34 is cut through the second layer 16 to define the groove 35.

At operation 118 the first layer 14 is coupled to the first middle surface 30 of the second layer 16. It should be appreciated that the first layer 14 can be coupled to the second layer 16 with an adhesive and/or glue.

At operation 120 the indicator 20 is inserted into the groove 35.

At operation 122 the third layer 18 is formed.

At operation 124 the first surface 38 of the third layer 18 is coupled to the second middle surface 32 of the second layer 16. It should be appreciated that the third layer 18 can be coupled to the second layer 18 with an adhesive and/or fastener.

At operation 126 the third layer 26 is coupled to an object 12, such as, for example, a person-support apparatus 12. It should be appreciated that the third layer 18 can be coupled to an object 12 with an adhesive and/or a fastener.

Embodiments of the invention can be described with reference to the following numbered clauses, with preferred features laid out in the dependent clauses:

1. An inclinometer, comprising:
a first layer including a transparent portion and a scale representing angles of inclination of the inclinometer with respect to a reference plane.
a second layer configured to coupled to a structure;
a middle layer positioned between the first and the second layer: the middle layer including a passage therethrough; and
an indicator movably disposed in the passage, the indicator being configured to move in the passage as the structure moves between a first position and a second position with respect to the reference plane and cooperate with the scale to indicate the angle of the structure with respect to the reference plane.

2. The inclinometer of clause 1, wherein the structure is a person-support apparatus.

3. The inclinometer of clause 1. wherein the second layer is provided with an opening for inserting the indicator in the passage.

4. The inclinometer of clause 1, wherein the indicator is spherical in shape.

5. The inclinometer of clause 1, wherein the passage is curved.

6. The inclinometer of clause 1, wherein the first layer, second layer, and middle layer are formed from a sheet of polymeric material.

7. The inclinometer of clause 1, wherein the passage filled with a fluid.

8. A person-support apparatus having an inclinometer coupled thereto, the inclinometer comprising.
a first layer, a second layer and a middle layer positioned between the first and the second layer; and
an indicator movably disposed in a passage in the middle layer, the indicator moving in the passage as the person-support apparatus articulates between a first position and a second position, indicating an angle corresponding to the first and the second position of a portion of the person-support apparatus.

9. The person-support apparatus of clause 8, wherein the inclinometer is coupled to at least one of a siderail, a head section, a foot section and a frame of the person-support apparatus.

10. The person-support apparatus of clause 8, wherein the first layer includes a transparent portion and is imprinted with a scale representing angles proximate the transparent portion.

11. The person-support apparatus of clause 8, wherein the second layer is configured to be coupled to portion of the person-support apparatus

12. The person-support apparatus of clause 8, wherein the second layer is provided with an opening for inserting the indicator in the passage.

13. The petson-support apparatus of clause 8, wherein the indicator is spherically shaped.

14. The person-support apparatus of clause 8, wherein the indicator is colored.

15. The person-support apparatus of clause 8, wherein the passage filled with a fluid.

16. A person-support apparatus, comprising
a lower frame:
an upper frame supported on a support above the lower frame, the upper frame including a deck supported on an intermediate frame, the deck being configured to move with respect to the intermediate frame; and
an inclinometer for measuring an angle of inclination of the deck with respect to a plane, the inclinometer configured to couple to the upper frame, the inclinometer comprising:
   a first layer, a second layer and a middle layer present between the first and the second layer; and
   an indicator movably disposed in a passage present in the middle layer, the indicator moving in the passage as the upper frame articulates between a first position and a second position, the indicator indicating an angle corresponding to the first and the second position of the upper frame.

17. The person-support apparatus of clause 16, wherein the first layer includes a transparent portion and a scale representing angles.

18. The person-support apparatus of clause 16, wherein the second layer is configured to be coupled to the head section.

19. The person-support apparatus of clause 16, wherein the second layer is provided with an opening for inserting the indicator in the passage.

20. The person-support apparatus of clause 16, wherein the indicator is a rolling element.

21 The person-support apparatus of clause 16, wherein the indicator is colored.

22. The person-support apparatus of clause 16, wherein the passage filled with a fluid.

23. An inclinometer for measuring an angle of inclination of a structure with respect to a plane, the inclinometer capable of being attached to the structure, the inclinometer comprising:
a first layer including a transparent portion and a scale representing angles;
a second layer configured to be coupled to the structure;
a middle layer positioned between the first layer and the second layer, the middle layer having a passage therein: and
an indicator movably disposed in the passage, the indicator moving in the passage as the structure moves between a first position and a second position, the indicator cooperating with the scale to indicate an angle corresponding to at least one of the first position and the second position of the structure with respect to the plane.

24. An inclinometer for measuring an angle of inclination of a structure with respect to a plane, the inclinometer capable of being attached to the structure, the inclinometer comprising:
a first layer including a transparent portion and a scale representing angles proximate the transparent portion;
a second layer including a passage therethrough, the second layer being configured to be coupled to the structure; and
an indicator movably disposed in the passage, the indicator moving in the passage as the structure moves between a first position and a second position with respect to the plane, the indicator cooperating with the scale to indicate an angle of inclination of the structure with respect to the plane.

25. An inclinometer, comprising:
a first layer;
a second layer including a first side, a second side, and a groove extending through the first side and the second side, the first layer coupling to the first side of the second layer;
an indicator configured to be positioned within the groove and move along the groove; and
a coupler configured to couple the second side of the second layer to an object.

26. The inclinometer of clause 25. wherein the first layer includes a transparent portion.

27. The inclinometer of clause 25, wherein the first layer includes angle indicating marks thereon.

28. The inclinometer of clause 25. wherein the coupler is adhesive.

29. The inclinometer of clause 25, wherein the indicator rolls in the groove.

30. The inclinometer of clause 25, wherein the indicator is a sphere.

31. The inclinometer of clause 25, wherein the groove filled with a fluid.

32. The inclinometer of clause 25, wherein the object is a person-support apparatus.

33. The inclinometer of clause 25, wherein the object is at least one of a ladder and a stool.

34. The inclinometer of clause 25, wherein the groove is curved.

35. The inclinometer of clause 25, wherein the first layer and the second layer are formed from a polymeric sheet.

36. The inclinometer of clause 25. wherein the groove includes a surface, the surface being concavely shaped.

37 The inclinometer of clause 25, wherein the groove includes a surface, the surface being slanted.

38. The inclinometer of clause 25, wherein the groove includes a surface with a protrusion thereon configured to help maintain the indicator within the groove.

39. An inclinometer, comprising:
a first layer including a transparent portion;
a second layer including a first side, a second side, and a groove extending through the first side and the second side, the first layer coupling to the first side of the second layer;
an indicator configured to be positioned within the groove and move along the groove;
a third layer including a first side and a second side, the first side of the third layer coupling to the second side of the second layer; and
a coupler coupling the second side of the third layer to an object.

40. The inclinometer of clause 39. wherein the coupler is an adhesive.

41. A method of manufacturing an inclinometer, comprising:
forming a first layer induing a substantially transparent portion;
forming a second layer having a first surface, a second surface, and a groove extending through the first surface and the second surface;
coupling the first layer to the first surface of the second layer;
inserting an indicator into the groove, the indicator being configured to move within the groove, and
coupling the second surface of the second layer to an object.

42. A method of manufacturing an inclinometer, comprising:
forming a first layer including a substantially transparent portion;
forming a second layer having a first surface, a second surface, and a groove extending through the first surface and the second surface;
coupling the first layer to the first surface of the second layer;
inserting an indicator into the groove, the indicator being configured to move within the groove;
forming a third layer;
coupling the third layer to the second surface of the second layer; and
coupling the third layer to an object

43. The method of clause 26, wherein the third layer has an opening therein, the indicator being inserted into the groove through the opening.

44. An inclinometer, comprising
a first layer;
a second layer;
at least one of the first and second layer having a channel,
at least one of the first and second layer having indicia representing angles;
a movable indicator positioned within the channel and configured to indicate an angle based on its position relative to the indicia; and
an adhesive configured to adhere the inclinometer to a surface of a movable structure to measure the angle of the structure with respect to a reference plane.

While embodiments of the disclosure have been illustrated and described in detail in the drawings and foregoing description, the same are to be considered as illustrative and not intended to be exhaustive or to limit the disclosure to the precise forms disclosed. Additional alternatives, modifications and variations can be apparent to those skilled in the art. Also, white multiple inventive aspects and principles can have been presented, they need not be utilized in combination, and various combinations of inventive aspects and principles are possible in light of the various embodiments provided above.

## Claims

1. An inclinometer (10) configured to be coupled to a structure (12) and measure an angle of inclination of the structure (12) with respect to a reference plane (P1), the inclinometer (10) comprising:
a first layer (14) including a transparent portion (26) and a scale (28) representing angles located proximate to the transparent portion (26);
a second layer (16) including an opening (34) therethrough that defines a path (35), the first layer (14) being coupled to a first side (30) of the second layer (16) such that the transparent portion (26) extends along the path (35): and
an indicator (20) movably disposed in the path (35), the indicator (20) moving along the path (35) as the structure (12) moves between a first orientation and a second orientation with respect to the reference plane (P1), the indicator (20) cooperating with the scale (28) to indicate an angle of inclination of the structure (12) with respect to the reference plane (P1).

2. The inclinometer (10) of claim 1 further comprising a third layer (16) coupled to a second side (32) of the second layer (18) opposite the first layer (14), the third layer (16) including an opening (42) for inserting the indicator (20) into the path (35).

3. The inclinometer (10) of claim 2, wherein the first layer (14), second layer (18), and the third layer (16) are formed from a sheet of polymeric material.

4. The inclinometer (10) of either claim 2 or claim 3, wherein the first layer (14) and the third layer (16) cooperate with the second layer (18) to maintain the indicator (20) within the path (35).

5. The inclinometer (10) of either claim 2 or claim 3, wherein the first layer (14) and the structure (12) cooperate with the second layer (18) to maintain the indicator (20) within the path (35).

6. The inclinometer (10) of any preceding claim, wherein the indicator (20) is spherically shaped.

7. The inclinometer (10) of any preceding claim, wherein the indicator (20) is disc shaped.

8. The inclinometer (10) of any preceding claim, wherein the path (35) is curved.

9. The inclinometer (10) of any preceding claim, wherein an adhesive (AL2) is used to couple the inclinometer (10) to the structure (12).

10. The inclinometer (10) of any preceding claim, wherein the path (35) is configured to contain a fluid.

11. The inclinometer (10) of any preceding claim, wherein the path (35) includes a protrusion configured to maintain the indicator (20) within the path (35)

12. The inclinometer (10) of any preceding claim, wherein the range of the scale (28) is from about -30° to about 90°.

13. A person-support apparatus comprising a structure (12) having an inclinometer (10) of any preceding claim coupled thereto, wherein the structure (12) is a ladder.

14. A person-support apparatus comprising a structure (12) having an inclinometer (10) of any preceding claim coupled thereto, wherein the structure (12) is a hospital bed (12) that includes an upper body support section (H1) configured to move between a first angular orientation and a second angular orientation with respect to the reference plane (P1) and a siderail (S1) coupled to the upper body support section (H1) and configured to move with the upper body support section (H1), the inclinometer (10) being configured to indicate the angle of inclination of the siderail (S1) with respect to the reference plane (P1).

15. A person-support apparatus comprising a structure (12) having an inclinometer (10) of any preceding claim coupled thereto, wherein the structure (12) is a hospital bed (12) that incudes an upper body support section (H1) configured to move between a first angular orientation and a second angular orientation with respect to the reference plane (P1), the inclinometer (10) being configured to indicate the angle of inclination of the upper body support section (H1) with respect to the reference plane (P1).
